# EUROPÄISCHE PATENTSCHRIFT

(11) **EP 1 989 971 B1**
(45) Veröffentlichungstag und Bekanntmachung des Hinweises auf die Patenterteilung: **11.08.2010**
(21) Anmeldenummer: 08007800.9
(22) Anmeldetag: 23.04.2008
(51) Int. Cl.: A47C 20/04, A47B 88/04

(54) **Verstelleinrichtung für Möbel**
Adjustment device for furniture
Dispositif de réglage pour meuble

(30) Priorität: 07.05.2007 DE 202007006663 U
(43) Veröffentlichungstag der Anmeldung: 12.11.2008
(73) Patentinhaber: Hettich Franke GmbH & Co. KG, 72336 Balingen-Weilstetten (DE)
(72) Erfinder: Haug, Ernst, 72336 Balingen (DE)
(74) Vertreter: von Bülow, Tam

(56) Entgegenhaltungen:
- WO-A-01/17401
- DE-A1- 10 228 891
- DE-U1- 20 000 619

## Beschreibung

Die vorliegende Erfindung betrifft eine Verstelleinrichtung für Möbel, mit einem elektrischen Antrieb, der über eine Antriebsstange mit einem verstellbaren Möbelteil gekoppelt ist, und mindestens einen Endschalter, der bei Erreichen einer maximalen Verstellposition des verstellbaren Möbelteils den Antrieb abschaltet, wobei in dem Antriebsstrang ein Freilauf vorgesehen ist, der bei einem Blockieren der Bewegung des verstellbaren Möbelteils den Antrieb von dem verstellbaren Möbelteil entkoppelt.

Die DE 203 11 366 zeigt einen elektrischen Antrieb zum Verstellen von Elementen eines Bettrahmens, bei dem über einen Elektromotor und ein Schneckengetriebe ein verfahrbarer Schieber zur Bewegung eines Möbelelementes vorgesehen ist. Um eine Endposition des Schiebers erfassen zu können, ist ein variabel anbringbarer Positionssensor vorgesehen. Dadurch kann ein automatisches Abschalten im Bereich der Endstellung erreicht werden. Wird jedoch das bewegbare Möbelteil vom Benutzer festgehalten, verfährt das Antriebselement bis in seine Ausgangslage zum Endschalter zurück. Bei einem anschließenden Loslassen des Möbelteiles fällt dieses widerstandslos gegen das feststehende Möbelelement.

Die DE 102 28 891 offenbart einen elektromotorischen Möbelantrieb, bei dem an einem Antriebsstrang zwischen dem Elektromotor und einem Verstellelement mechanische Kupplungsmittel vorgesehen sind, die beim Erreichen oder Überschreiten eines vorgegebenen maximalen Drehmomentes selbsttätig den Elektromotor abkuppeln. Dadurch wird eine Überlastsicherung bereitgestellt, die insbesondere Sicherheitsanforderungen erfüllt. Es sind jedoch keine gesonderten Endschalter vorgesehen, die ein geräuschloses Abschalten in der jeweiligen Endstellung ermöglichen.

Die DE 203 08 208 offenbart einen motorischen Antrieb für Lattenroste, bei der ein Antrieb einen Schwenkarm zum Verstellen eines Möbelteils antreibt. Die Steuerung des Antriebes ist in dieser Druckschrift jedoch nicht näher erläutert.

Es ist daher Aufgabe der vorliegenden Erfindung eine Verstelleinrichtung für Möbel zu schaffen, die ein automatisches Abschalten des Antriebes sowohl bei Erreichen einer Endposition als auch bei einem Blockieren des Möbelteils gewährleistet.

Diese Aufgabe wird mit einer Verstelleinrichtung für Möbel mit den Merkmalen des Anspruches 1 gelöst.

Erfindungsgemäß ist der Freilauf mit einem Schaltelement gekoppelt und bei Aktivierung des Freilaufs über das Schaltelement ist der elektrische Antrieb abschaltbar. Dadurch wird gewährleistet, dass bei einem Blockieren des Möbelteils der Antrieb abgeschaltet wird und nicht bis zum Erreichen des Endschalters weiterläuft. Dadurch wird gewährleistet, dass bei Lösen der Blockade des Möbelteils das Möbelteil nicht in die Endposition herunterfällt sondern durch die Verstelleinrichtung aufgefangen wird. Denn durch Abschalten des Antriebes werden die Elemente zum Verstellen des Möbelteils nicht bis in die Endposition bewegt.

Gemäß einer bevorzugten Ausgestaltung der Erfindung ist über das Schaltelement der mindestens eine Endschalter zum Abschalten des Antriebes betätigbar. Dadurch kann der Endschalter betätigt werden, wenn das Möbelteil die Endposition erreicht hat oder das Schaltelement durch den Freilauf aktiviert wird. Für die Funktion des Abschaltens sind daher nicht getrennte Schalter notwendig.

Vorzugsweise ist über den Freilauf das Schaltelement gegen die Kraft einer Feder in eine Position zum Abschalten des Antriebes bewegbar. Dadurch wird ein versehentliches Abschalten des Antriebes verhindert. Das Schaltelement kann dabei eine Federplatte umfassen, die gegen den Freilauf vorgespannt ist und bei Bewegen des Freilaufes kann die Federplatte dann über Anlaufschrägen verschoben werden. Dies gewährleistet eine zuverlässige Funktion zum Abschalten des Antriebes bei Betätigung des Freilaufes. Die Federplatte kann dabei entweder über eine Wippe für ein Abschalten des Antriebes sorgen oder auch direkt auf einen Endschalter einwirken.

Gemäß einer weiteren Ausgestaltung der Erfindung sind zwei Endschalter zur Begrenzung des maximalen Verstellweges des verstellbaren Möbelteils vorgesehen, wobei es ausreicht, wenn nur ein Schalter mit dem Freilauf gekoppelt ist. Der Antriebsstrang kann dabei als Getriebe mit ineinandergreifenden Zahnrädern ausgebildet sein, wobei dann das verstellbare Möbelteil über einen drehbaren Antriebshebel bewegbar ist. Das verstellbare Möbelteil kann als Lattenrost oder als bewegbare Stütze eines Polstermöbels ausgebildet sein.

Die Erfindung wird nachfolgend anhand von zwei Ausführungsbeispielen mit Bezug auf die beigefügten Zeichnungen näher erläutert. Es zeigen:
- Figur 1: eine perspektivische Ansicht eines Lattenrostes mit der erfindungsgemäßen Verstelleinrichtung;
- Figur 2: eine Ansicht der Verstelleinrichtung für den Lattenrost der Figur 1;
- Figur 3: eine perspektivische Explosionsdarstellung der erfindungsgemäßen Verstelleinrichtung;
- Figuren bis 4C 4A: ein Teil der Verstelleinrichtung der Figur 3 im Bereich der Endschalter;
- Figur 5: eine Detailansicht der Schaltelemente der Verstelleinrichtung;
- Figur 6: eine perspektivische Explosionsdarstellung des Freilaufs der Verstelleinrichtung der Figur 3;
- Figuren: 7A

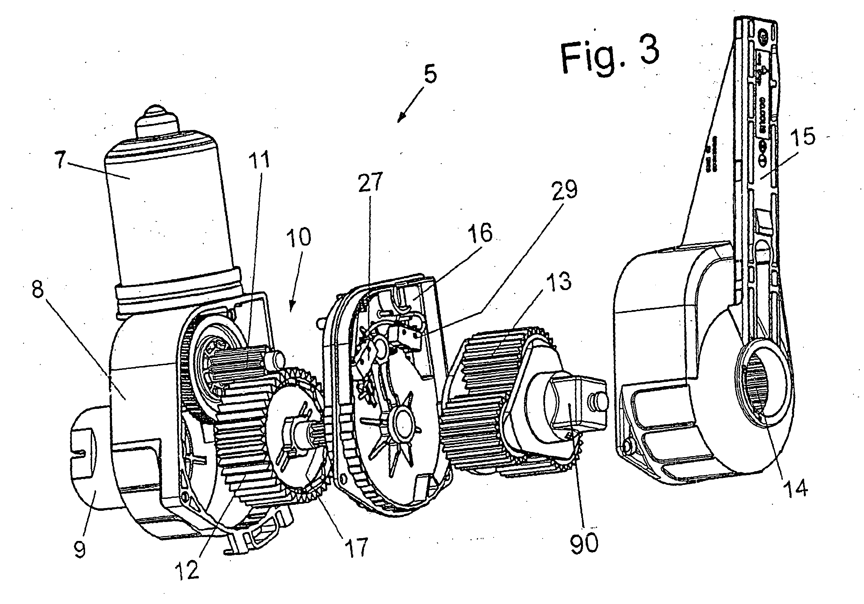

- bis 7E: mehrere Ansichten des Freilaufs der Verstelleinrichtung der Figur 3, und

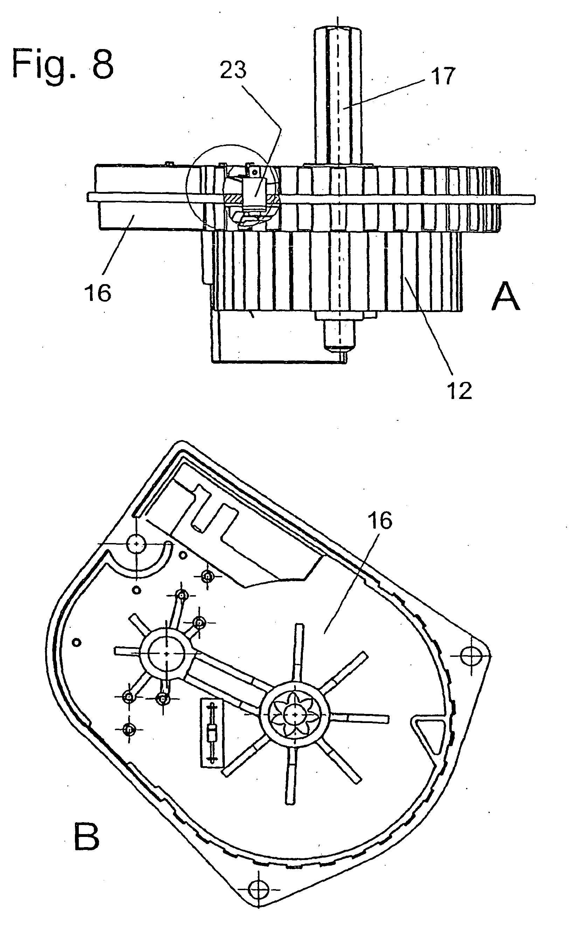

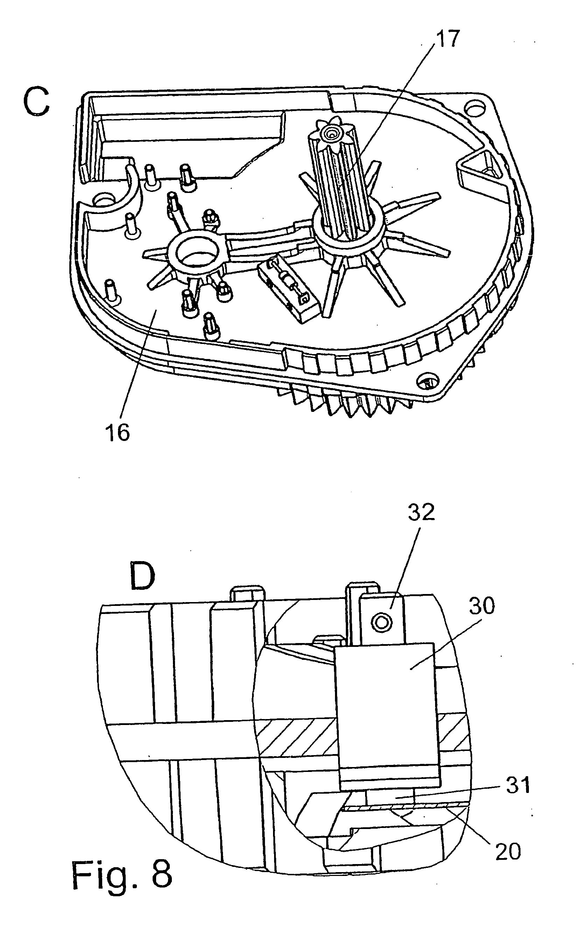

- Figuren 8A is 8D: mehrere Ansichten eines modifizierten Schaltelementes für eine Verstelleinrichtung der Figur 3.

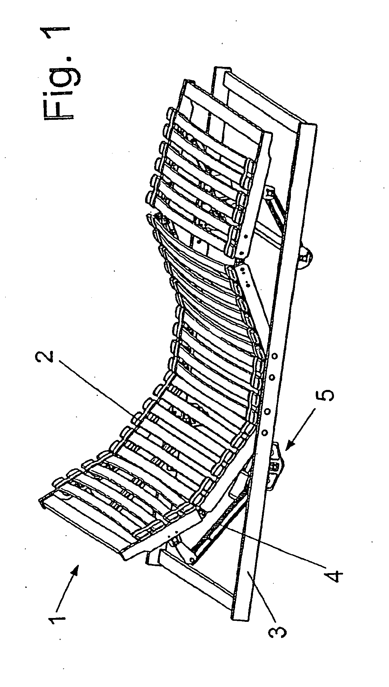

In Figur 1 ist ein Möbel 1 in Form eines Bettgestelles gezeigt, das einen verstellbaren Lattenrost 2 umfasst, der an einem Bettrahmen 3 gelagert ist. Der verstellbare Lattenrost 2 ist über einen Beschlag 4 bewegbar, wobei hierfür eine angetriebene Verstelleinrichtung 5 vorgesehen ist.

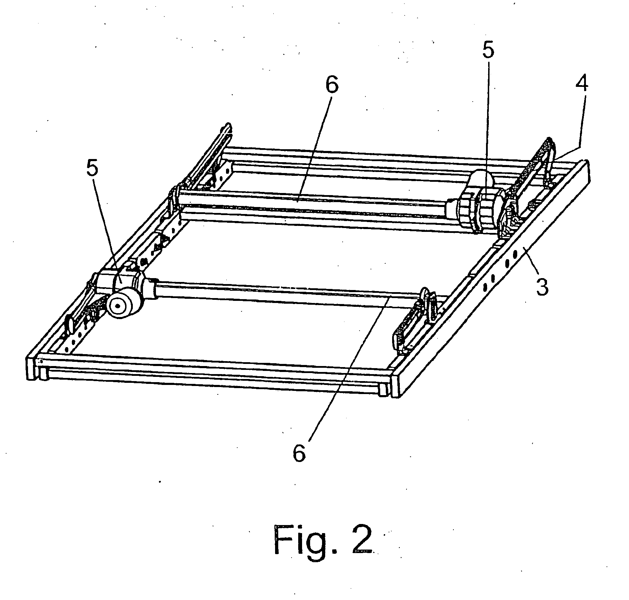

Wie in Figur 2 zu sehen ist, umfasst die angetriebene Verstelleinrichtung 5 eine Welle 6, so dass an gegenüberliegenden Seiten des Rahmengestells 3 der Lattenrost 2 bewegbar ist.

Die Verstelleinrichtung 5 ist in Figur 3 im Detail dargestellt, wobei ein elektrischer Antriebsmotor 7 an einem Gehäuse 8 festgelegt ist, das über eine Aufnahme 9 für ein Vierkantrohr mit dem Rahmengestell 3 über Befestigungselemente verbindbar ist. Die Verstelleinrichtung 5 umfasst ferner ein Getriebe 10, das Zahnräder 11, 12, 17, 13 und 14 umfasst, die für eine entsprechende Übersetzung sorgen, um einen verschwenkbaren Antriebshebel 15 zu drehen und damit den Lattenrost 2 zu verstellen. Durch das Getriebe 10 ist ein Vierkant 90 durchgeführt, das verdrehsicher an einem Stützwinkel gelagert ist. Im Bereich des Getriebes ist eine Platte 16 vorgesehen, an der Endschalter 27 und 29 vorgesehen sind, die bei Erreichen von Endstellungen des Schwenkhebels 15 den Antriebsmotor 7 abschalten.

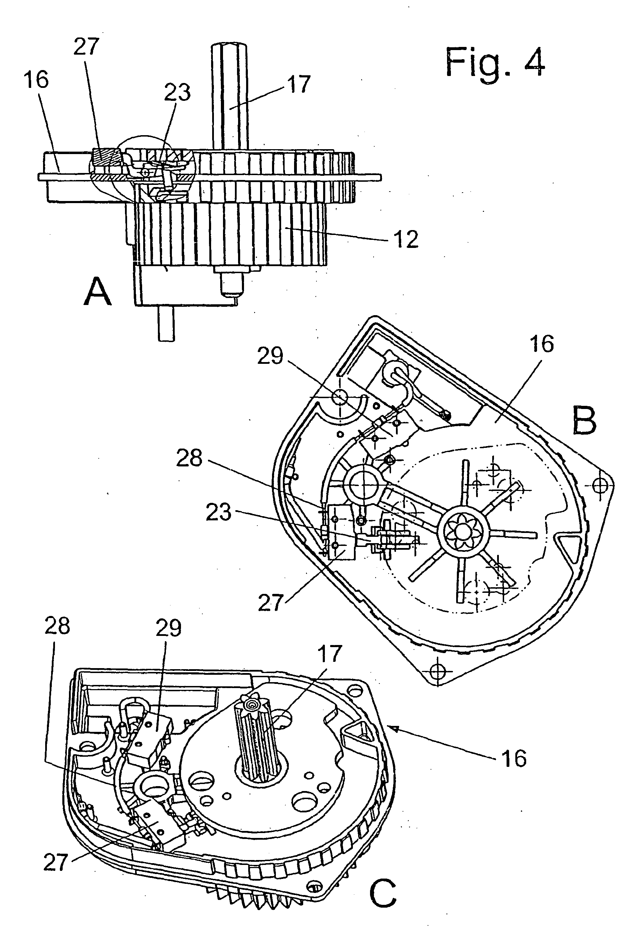

In den Figuren 4A bis 4C ist der Bereich der Platte 16 im Detail dargestellt. Die Platte 16 ist zwischen einem kleineren Zahnrad 17 und einem größeren Zahnrad 12 angeordnet. In dem Zahnrad 12 ist ein Freilauf vorgesehen, der bei Betätigen auf eine Wippe 23 wirkt, damit der Endschalter 27 den Antrieb 7 abschaltet. Hierfür ist der Endschalter 27 über eine Leitung 28 mit einer Steuerung des Antriebes 7 verbunden. Auch der Endschalter 29 ist über eine entsprechende Leitung mit der Steuerung verbunden.

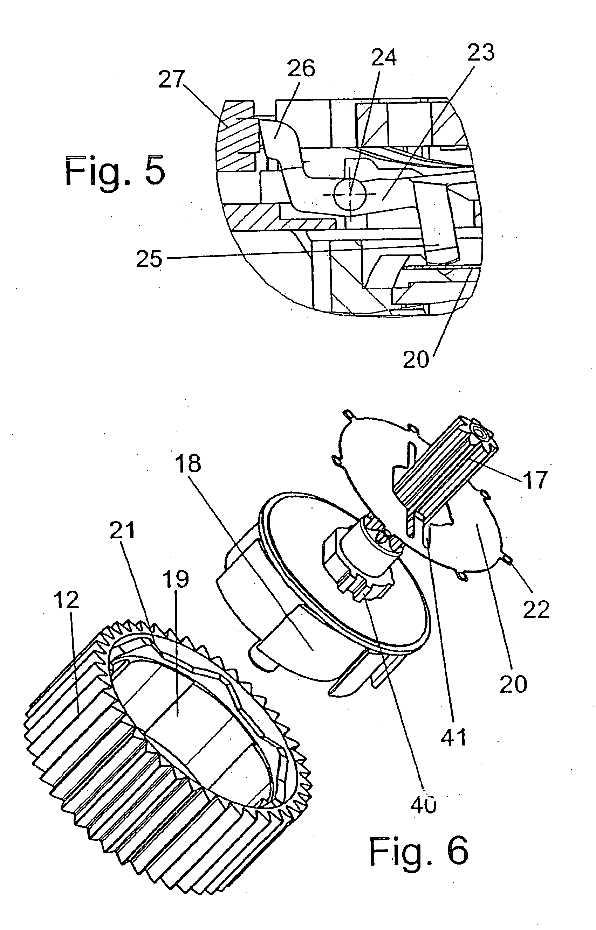

In Figur 5 ist die Wippe 23 als Schaltelement für den Endschalter 27 vergrößert dargestellt, die um eine Achse 24 drehbar gelagert ist und mit einem Ende 25 an einer Federplatte 20 anliegt. Wird die Federplatte 20 zur Drehachse der Zahnräder 12 und 17 axial verschoben, bewegt sich die Wippe 23 gegen den Uhrzeigersinn und drückt mit einem zum Abschnitt 25 gegenüberliegenden Abschnitt 26 auf ein Kontaktelement des Endschalters 27.

In Figur 6 ist das Zahnrad 12 gezeigt, das zur Bildung eines Freilaufes an einem inneren Umfang mehrere Rastklinken 19 aufweist, die in Eingriff mit Federelementen 18 gebracht werden können. Die Federelemente 18 sind drehfest mit einer Welle verbunden, an der das Zahnrad 17 gelagert ist. Dadurch wird gewährleistet, dass über den Antriebsstrang eine Kraft zum Verstellen des Möbelteils nur in eine Richtung erfolgen kann. Ferner ist an der Antriebswelle ein Mitnehmer 40 gelagert, der mit einem radialen Vorsprung in einen Schlitz 41 an einer Federplatte 20 eingreift. Die Federplatte 20 ist in axiale Richtung verschiebbar an dem Mitnehmer 40 gelagert und weist am äußeren Umfang eine Vielzahl von Vorsprüngen 22 auf. Diese Vorsprünge liegen an einem Ring mit Anlaufschrägen 21 an dem Zahnrad 12 an, so dass bei einer relativen Drehung der Federplatte 20 zu dem Zahnrad 12 die Federplatte 20 axial verschoben wird. Eine Relativbewegung der Federplatte 20 zu dem Zahnrad 12 findet immer dann statt, wenn der Freilauf aktiviert wird.

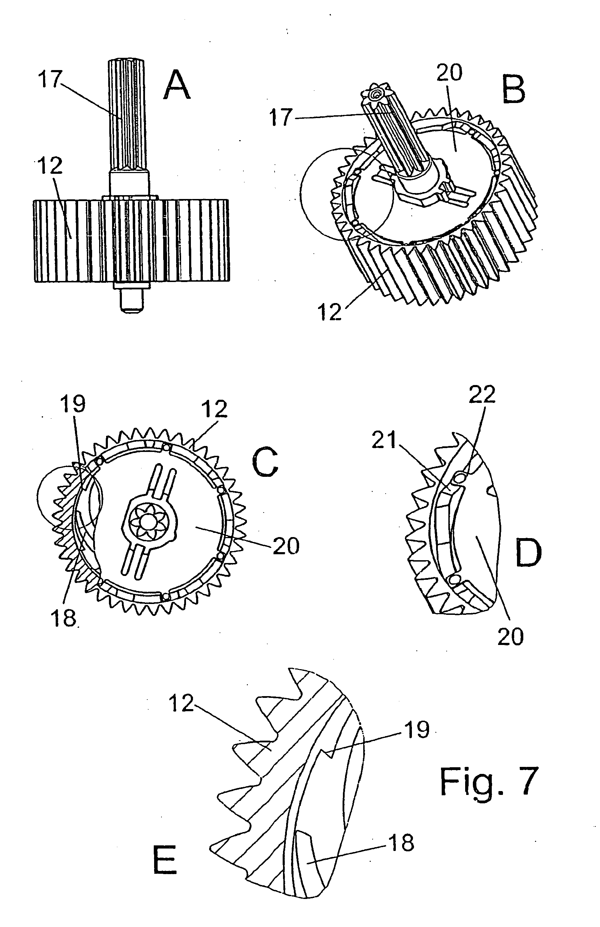

In den Figuren 7A bis 7E ist der Bereich des Freilaufs in der zusammengebauten Position gezeigt. Die Federelemente 18 sind radial nach außen gedrückt und liegen am inneren Umfang des Zahnrades 12 an, an dem die Rastklinken 19 ausgebildet sind. Zudem ist die Federplatte 20 so angeordnet, dass die Vorsprünge 22 an den Anlaufschrägen 21 angeordnet sind, wobei bei einer gemeinsamen Bewegung der Federplatte 20 mit den Zahnrad 12 kein axiales Verschieben der Federplatte 20 erfolgt. Erst wenn das verstellbare Möbelteil 4 blokkiert wird dreht der Antrieb 7 die Zahnräder 11 und 12 weiter, wobei aufgrund des Blockierens der Schwenkhebel 15 nicht gedreht wird und somit die Zahnräder 14, 13 und 17 stillstehen. Dadurch wird der Freilauf betätigt, so dass die Federplatte 20 relativ zu dem Zahnrad 12 gedreht wird, wodurch ein axiales Verschieben erfolgt. Die Federplatte 20 drückt auf die Wippe 23 und verschwenkt diese derart, dass der Endschalter 27 betätigt wird und den Antrieb 7 abschaltet. Wenn die Blockade des Verstellelementes gelöst wird, befindet sich die Verstelleinrichtung in der abgeschalteten Position und der Schwenkhebel 15 kann nur um einen geringen Betrag herabfallen, bis die Federlaschen 18 in die Rastklinken 19 eingreifen. Dann kann der Antrieb 7 wieder eingeschaltet und in die gewünschte Richtung gedreht werden.

In den Figuren 8A bis 8D ist eine modifizierte Ausführungsform einer Verstelleinrichtung gezeigt, bei der lediglich der Bereich des Schalters benachbart zu der Federplatte 20 modifiziert ist. Die übrigen Bauelemente sind wie bei dem ersten Ausführungsbeispiel ausgebildet. Die Federplatte 20 wirkt nicht auf eine Wippe 23, sondern unmittelbar auf einen Endschalter 30, der mit einem Kontaktstift 31 an der Federplatte 20 anliegt. Gegenüberliegend ist ein Anschluss 32 vorgesehen. Dadurch wird die Anzahl der notwendigen Bauteile reduziert und der Endschalter 30 kann direkt ein Abschalten des Antriebes 7 vornehmen, sofern der Freilauf 18, 19 betätigt wird oder eine Endstellung des Schwenkhebels 15 erreicht wird.

In dem gezeigten Ausführungsbeispiel wird über den elektrischen Antrieb 7 ein Schwenkhebel 15 angetrieben. Das Getriebe kann je nach Einsatzzweck modifiziert werden und eine deutlich geringere Anzahl von Zahnrädern aufweisen. Zudem lässt sich die Verstelleinrichtung statt für Lattenroste auch für andere Möbel, wie Sessel, Liegen oder Nackenstützen einsetzen.

## Patentansprüche

1. Verstelleinrichtung für Möbel, mit einem elektrischen Antrieb (7), der über einen Antriebsstrang mit einem verstellbaren Möbelteil (4) gekoppelt ist, und mindestens einem Endschalter (27, 29), der bei Erreichen einer maximalen Verstellposition des verstellbaren Möbelteils (4) den Antrieb (7) abschaltet, wobei in dem Antriebsstrang ein Freilauf (18, 19) vorgesehen ist, der bei einem Blockieren der Bewegung des verstellbaren Möbelteils (4) den Antrieb (7) von dem verstellbaren Möbelteil (4) entkoppelt, **dadurch gekennzeichnet, dass** der Freilauf (18, 19) mit einem Schaltelement (20, 23) gekoppelt ist und bei Aktivierung des Freilaufs (18, 19) über das Schaltelement (20, 23) der elektrische Antrieb (7) abschaltbar ist.

2. Verstelleinrichtung nach Anspruch 1, **dadurch gekennzeichnet, dass** über das Schaltelement (20, 23) der mindestens eine Endschalter (27, 30) zum Abschalten des Antriebes (7) betätigbar ist.

3. Verstelleinrichtung nach Anspruch 1 oder 2, **dadurch gekennzeichnet, dass** über den Freilauf das Schaltelement (20, 23) gegen die Kraft einer Feder in eine Position zum Abschalten des Antriebes (7) bewegbar ist.

4. Verstelleinrichtung nach einem der Ansprüche 1 bis 3, **dadurch gekennzeichnet, dass** das Schaltelement eine Federplatte (20) umfasst, die gegen den Freilauf (18, 19) vorgespannt ist und beim Bewegen des Freilaufs (18, 19) die Federplatte (20) über Anlaufschrägen (21) verschiebbar ist.

5. Verstelleinrichtung nach Anspruch 4, **dadurch gekennzeichnet, dass** über die Federplatte (20) eine Wippe (23) betätigbar ist.

6. Verstelleinrichtung nach Anspruch 4, **dadurch gekennzeichnet, dass** die Federplatte (20) direkt mit einem Endschalter (30) gekoppelt ist.

7. Verstelleinrichtung nach einem der Ansprüche 1 bis 6, **dadurch gekennzeichnet, dass** zwei Endschalter (27, 29, 30) zur Begrenzung des maximalen Verstellweges des verstellbaren Möbelteils (4) vorgesehen sind.

8. Verstelleinrichtung nach einem der Ansprüche 1 bis 7, **dadurch gekennzeichnet, dass** der Antriebsstrang ein Getriebe mit ineinandergreifenden Zahnrädern (11 bis 14) umfasst.

9. Verstelleinrichtung nach einem der Ansprüche 1 bis 8, **dadurch gekennzeichnet, dass** das verstellbare Möbelteil (4) über einen drehbaren Antriebshebel (15) bewegbar ist.

10. Verstelleinrichtung nach einem der Ansprüche 1 bis 9, **dadurch gekennzeichnet, dass** das verstellbare Möbelteil als Lattenrost (2) ausgebildet ist.

## Claims

1. Adjustment device for furniture, comprising an electric drive (7) which is coupled to an adjustable furniture part (4) via a drive train, and at least one limit switch (27, 29) which disconnects the drive (7) on reaching a maximum adjustment position of the adjustable piece of furniture (4), wherein the drive train is provided with a freewheel mechanism (18, 19) which uncouples the drive (7) from the adjustable piece of furniture (4) when the movement of the adjustable piece of furniture (4) is blocked, **characterised in that** the freewheel mechanism (18, 19) is coupled to a switching element (20, 23) and **in that** the electric drive (7) can be disconnected if the freewheel mechanism (18, 19) is activated via the switching element (20, 23).

2. Adjustment device according to claim 1, **characterised in that** the at least one limit switch (27, 30) can be operated via the switching element (20, 23) to disconnect the drive (7).

3. Adjustment device according to claim 1 or 2, **characterised in that** the switching element (20, 23) can be moved via the freewheel mechanism into a position for disconnecting the drive (7) against the force of a spring.

4. Adjustment device according to any of claims 1 to 3, **characterised in that** the switching element comprises a spring plate (20) which is preloaded against the freewheel mechanism (18, 19), and **in that** the spring plate (20) is displaceable via approach bevels (21) as the freewheel mechanism (18, 19) moves.

5. Adjustment device according to claim 4, **characterised in that** a rocker (23) can be operated via the spring plate (20).

6. Adjustment device according to claim 4, **characterised in that** the spring plate (20) is directly coupled to a limit switch (30).

7. Adjustment device according to any of claims I to 6, **characterised in that** two limit switches (27, 29, 30) are provided for limiting the maximum adjustment distance of the adjustable furniture part (4).

8. Adjustment device according to any of claims 1 to 7, **characterised in that** the drive train comprises gearing with meshing gears (11 to 14).

9. Adjustment device according to any of claims 1 to 8, **characterised in that** the adjustable furniture part (4) can be moved via a rotatable drive lever (15).

10. Adjustment device according to any of claims 1 to 9, **characterised in that** the adjustable furniture part is designed as a slatted piece (2).

## Revendications

1. Dispositif de réglage pour meuble, avec un entraînement (7) électrique qui est couplé via un groupe propulseur à une partie de meuble (4) réglable et avec au moins un commutateur de fin de course (27, 29) qui arrête l'entraînement (7) lors de l'atteinte d'une position de réglage maximale de la partie de meuble (4) réglable, une roue libre (18, 19) étant prévue dans le groupe propulseur, laquelle découple lors d'un blocage du mouvement de la partie de meuble (4) réglable l'entraînement (7) de la partie de meuble (4) réglable, **caractérisé en ce que** la roue libre (18, 19) est couplée à un élément de commutation (20, 23), et **en ce que** l'entraînement électrique (7) peut être arrêté lors de l'activation de la roue libre (18, 19) via l'élément de commutation (20, 23).

2. Dispositif de réglage selon la revendication 1, **caractérisé en ce que** ledit au moins un commutateur de fin de course (27, 30) peut être actionné pour l'arrêt de l'entraînement (7) via l'élément de commutation (20, 23).

3. Dispositif de réglage selon l'une des revendications 1 ou 2, **caractérisé en ce que** l'élément de commutation (20, 23) peut être déplacé via la roue libre contre la force d'un ressort dans une position destinée à arrêter l'entraînement (7).

4. Dispositif de réglage selon l'une quelconque des revendications 1 à 3, **caractérisé en ce que** l'élément de commutation comprend une plaque de ressort (20) qui est précontrainte contre la roue libre (18, 19), et **en ce que** la plaque de ressort (20) peut être déplacée lors du mouvement de la roue libre (18, 19) au moyen de rampes de poussée (21).

5. Dispositif de réglage selon la revendication 4, **caractérisé en ce qu'**une bascule (23) peut être actionnée par la plaque de ressort (20).

6. Dispositif de réglage selon la revendication 4, **caractérisé en ce que** la plaque de ressort (20) est couplée directement à un commutateur de fin de course (30).

7. Dispositif de réglage selon l'une quelconque des revendications 1 à 6, **caractérisé en ce que** deux commutateurs de fin de course (27, 29, 30) sont prévus pour limiter la course de réglage maximale de la partie de meuble (4) réglable.

8. Dispositif de réglage selon l'une quelconque des revendications 1 à 7, **caractérisé en ce que** le groupe propulseur comprend un engrenage avec des roues dentées (11 à 14) s'engrenant.

9. Dispositif de réglage selon l'une quelconque des revendications 1 à 8, **caractérisé en ce que** la partie de meuble (4) réglable peut être déplacée par l'intermédiaire d'un levier d'entraînement (15) rotatif.

10. Dispositif de réglage selon l'une quelconque des revendications 1 à 9, **caractérisé en ce que** la partie de meuble réglable est réalisée comme un caillebotis (2) .
